Europäisches Patentamt

European Patent Office

Office européen des brevets

(11) Veröffentlichungsnummer: **0 249 849 B1**

(12) **EUROPÄISCHE PATENTSCHRIFT**

(45) Veröffentlichungstag der Patentschrift: **11.09.91**

(51) Int. Cl.⁵: **B01J 33/00, B01J 37/00**

(21) Anmeldenummer: **87108274.9**

(22) Anmeldetag: **09.06.87**

Die Akte enthält technische Angaben, die nach dem Eingang der Anmeldung eingereicht wurden und die nicht in dieser Patentschrift enthalten sind.

(54) **Verfahren zur Stabilisierung aktivierter Katalysatormassen.**

(30) Priorität: **16.06.86 DE 3620275**

(43) Veröffentlichungstag der Anmeldung:
**23.12.87 Patentblatt 87/52**

(45) Bekanntmachung des Hinweises auf die Patenterteilung:
**11.09.91 Patentblatt 91/37**

(84) Benannte Vertragsstaaten:
**AT BE CH DE ES FR GB IT LI NL SE**

(56) Entgegenhaltungen:
**FR-A- 858 789**
**FR-A- 2 106 623**
**US-A- 3 954 678**

(73) Patentinhaber: **Süd-Chemie Aktiengesellschaft**
**Lenbachplatz 6**
**W-8000 München 2(DE)**

(72) Erfinder: **Pohl, Joachim, Dr.**
**Leinenweberweg 23**
**W-4000 Düsseldorf(DE)**
Erfinder: **Carduck, Franz-Josef, Dr.**
**Landstrasse 18**
**W-5657 Haan(DE)**
Erfinder: **Göbel, Gerd, Dr.**
**Lindenstrasse 10**
**W-4006 Erkrath(DE)**

(74) Vertreter: **Reitzner, Bruno, Dr. et al**
**Patentanwälte Dipl.-Ing. R. Splanemann Dr.**
**B. Reitzner, Dipl.-Ing. K. Baronetzky Tal 13**
**W-8000 München 2(DE)**

## Beschreibung

Die Erfindung betrifft ein Verfahren zur Stabilisierung stückiger, aktivierter Kupfer/Chrom- oder Kupfer/Zink-Hydrierkatalysatoren nach dem Schritt der Aktivierung der Katalysator-Ausgangsmassen auf Basis von Oxiden, Hydroxiden, Carbonaten und basischen Carbonaten in einem $H_2$ enthaltenden Gasstrom.

Stückige Katalysatormassen, die insbesondere in Form Von Tabletten, Strangpreßlingen oder in anderer Weise pelletiert vorliegen, werden in der Technik in großem Umfang eingesetzt. Meist handelt es sich bei derartigen Katalysatormassen um Massen aus einer oder mehreren katalytisch aktiven Komponenten, die gegebenenfalls auch inerte Trägermaterialien enthalten. Bekannt sind insbesondere Metall- und Metallträger-Katalysato-ren, die für zahlreiche Hydrierprozesse benötigt und eingesetzt werden.

Katalysatoren dieses Typs werden üblicherweise vor ihrem Einsatz im Hydrierverfahren durch eine Behandlung in reduzierender Atmosphäre, insbesondere in Wasserstoff oder in einem mehr oder weniger große Mengen Wasserstoff enthaltenden Gasgemisch, reduktiv aktiviert. Die resultierenden Katalysatormassen sind ausgesprochen empfindlich gegenüber Luftzutritt, was sich in einem deutlichen Rückgang ihrer Hydrieraktivität und auch in pyrophorem Verhalten zeigt. Die Herstellung, gegebenenfalls auch die Lagerung und der Transport derartiger hochaktiver Katalysatormassen sowie ihr Einsatz in der Praxis ist demgemäß sehr aufwendig und stellt ausgesprochen hohe Anforderungen an die Sauerstoff-freie Arbeitsweise.

In der Praxis sind unterschiedliche Möglichkeiten zur Bewältigung dieser Problematik bekannt geworden. So kann man luftempfindliche aktive Katalysatoren von Einsatzort und Einsatzzeitpunkt getrennt dadurch herstellen, daß man die aktiven Hydrierkatalysatoren durch Tränken mit Hartfett, Hartparaffin, Fettamin oder ähnlichen Verbindungen stabilisiert. So beschreibt beispielsweise die DD-A-155 390 ein Verfahren zur Herstellung von Katalysatoren, die aus pyrophorem Nickelmetall, gegebenenfalls auf anorganischen Trägern, bestehen und mit Stoffen imprägniert sind, die oberhalb von 313 K (40° C) schmelzen. Nach diesem Verfahren sollen die geschmolzenen Suspensionen von Katalysator und Imprägniermittel durch Versprühung und gleichzeitige Abkühlung in eine feinkörnige, gut rieselfähige, luftstabile Form überführt werden.

In der FR-A- 15 55 015 werden pulverförmige RaneyNickel-Katalysatoren beschrieben, die mit einer Schutzschicht überzogen sind, welche durch Materialien mit Schmelzpunkten im Bereich von 60 bis 100° C gebildet wird und insbesondere hydrierte pflanzliche Öle, Fettsäuren bzw. Fettsäuresalze, Glykole, polyfunktionelle Alkohole und organische Polymersubstanzen umfaßt. Diese vor Luftzutritt schützenden, bei erhöhten Temperaturen schmelzbaren Feststoffschichten sollen mit Hilfe eines Lösungsmittels auf die Katalysatormassen aufgebracht werden.

Derartige Verfahren zur Stabilisierung aktivierter stückiger Katalysatoren fanden wegen der damit verbundenen Nachteile in der Praxis nur begrenzte Anwendung. Nachteile sind insbesondere darin zu sehen, daß die mit einem schützenden Feststoff umgebenen Katalysator-Formstücke im Vergleich zum unimprägnierten Katalysator-Formling an Volumen zunehmen und bei Befüllung des Reaktors für die zu katalysierende Hydrierreaktion zu einer Kapazitätseinbuße führen, da im Hydrierbetrieb die Imprägnierschichten wieder abgelöst werden und dadurch die ursprüngliche, für den jeweiligen Reaktor-Innenraum vorgesehene Vollfüllung auf eine Teilfüllung zusammensinkt. Dadurch entsteht im Reaktor ungenutzter, nicht von Katalysatormasse gefüllter Raum. Durch eine derartige "Schrumpfung" der Katalysatorschutzschicht wird die erreichbare Raum-Zeit-Ausbeute des jeweiligen Verfahrens deutlich verringert. Zudem sind die Reaktionsprodukte mit mehr oder weniger` großen Mengen der geschmolzenen bzw. gelösten Imprägniermittel verunreinigt; eine Abtrennung dieser Stoffe ist somit zumindest für die ersten Produktchargen erforderlich.

Aufgrund dieser Nachteile hat sich bei den großindustriell eingesetzten katalytischen Verfahren die insitu-Aktivierung der Katalysatorfüllung eines Reaktors durchgesetzt, bei der stückige Katalysatoren im Reaktor unmittelbar vor ihrem Einsatz aus den entsprechend formgestalteten, stückigen Katalysator-Formmassen im reduzierenden Gasstrom aktiviert werden.

Diese Verfahrensweise wird beispielsweise an KupferChrom- und Kupfer-Zink-Katalysatoren für die Hydrierung von Triglyceriden, Fettsäureestern und freien Fettsäuren mit Wasserstoff angewendet: Die stückigen, leicht reduzierbares Kupferoxid enthaltenden Katalysator-Formmassen werden einer Reduktion mit Wasserstoff enthaltenden Gasmischungen unterzogen, wobei das Kupferoxid in fein verteiltes metallisches Kupfer umgewandelt wird. Abgesehen davon, daß die entstehenden Katalysatormassen besonders pyrophor sind, erfahren die Formlinge - Tabletten, Extrudate oder Pellets - eine Schrumpfung ihrer Volumina um bis zu 30 %. Die vor Beginn der reduzierenden Aktivierung den Reaktorinnenraum vollständig füllende Katalysatorschicht schrumpft also bei der Hydrierung um bis zu 30 %, wo-durch ebenfalls ein Reaktor-Leervolumen entsteht, das für die zu katalysierende Hydrierreaktion nicht zur Verfügung steht. Auch hierbei wird die theoretisch erreichbare Raum-Zeit-Ausbeute des Reaktors drastisch verringert.

Aus der FR-A-858 789 ist ein Verfahren zur Stabilisierung von aktivierten Katalysatoren bekannt, bei dem man diese mit Cyclohexanol, Methylcyclohexanol, Cyclohexanon oder Methylcyclohexanon tränkt. Bezüglich der zu behandelnden Katalysatoren ist nur angegeben, daß es sich um Metallkatalysatoren handelt, die bei der Synthese von Kohlenwasserstofölen aus Wasserstoff und Kohlenmonoxid, d.h. bei der Fischer-Tropsch-Synthese, Verwendung finden. Die zum Schutz der Katalysatoren eingesetzten Tränkflüssigkeiten verursachen in dem System, in dem die Fischer-Tropsch-Katalysa toren eingesetzt werden, keine Probleme. Die bei dieser Synthese entstehenden, Kohlenwasserstofföle werden ohnehin als Treibstoffe für Verbrennungsmotoren eingesetzt, wobei eine Verunreinigung mit den genannten zyklischen Verbindungen oder deren Folgeprodukten keine Rolle spielt. Bei der Herstellung von Fettalkoholen sind Verunreinigungen durch solche zyklischen Verbindungen in höchstem Maße unerwünscht, da sich diese Substanzen praktisch nicht aus dem Produkt entfernen lassen. Außerdem werden die bekannten Katalysatoren nach dem Tränken nicht mehr gesiebt um Feinanteile zu entfernen.

Der Erfindung lag die Aufgabe zugrunde, ein verbessertes, auf Kupfer/Chrom- oder Kupfer/Zink-Hydrierkatalysatoren anwendbares Verfahren zu entwickeln, mit dessen Hilfe die Stabilisierung der Katalysatoren in hochaktiver Form ermöglicht wird. Dabei sollte die Lagerfähigkeit der Katalysatoren unter Luftzutritt erheblich verbessert werden und damit eine Lagerung der Katalysator-Formlinge über längere Zeit unter Normalbedingungen ermöglicht werden. Insbesondere sollten die aus dem Verfahren resultierenden Katalysatoren außerhalb des Reaktors hergestellt und weiterverarbeitet und ohne Nachteile, beispielsweise Aktivitätsverluste oder Gefahr pyrophorer Reaktionen, zum Einsatzort transportiert werden können. Zudem sollte erreicht werden, daß die Katalysatormassen, wenn sie einmal in den Reaktor eingefüllt sind, keiner Schrumpfung ihres Volumens unterliegen und somit die zur Verfügung stehende Kapazität des Katalysators durch eine den Innenraum voll erfüllende Katalysatorschüttung vollständig ausgenützt wird.

Die Erfindung betrifft ein Verfahren zur Stabilisierung stückiger, aktivierter Kupfer/Chrom- oder Kupfer/Zink-Hydrierkatalysatoren nach dem Schritt der Aktivierung der Katalysator-Ausgangsmassen auf Basis von Oxiden, Hydroxiden, Carbonaten und basischen Carbonaten in einem $H_2$ enthaltenden Gasstrom, dadurch gekennzeichnet, daß man

(a) stückige, aktivierte Katalysator-Ausgangsmassen aus dem Aktivier-Reaktor unter Schutzgas in einen flüssigen Alkohol oder eine Mischung zweier oder mehrerer Alkohole aus der Gruppe der geradkettigen und vorzweigten Alkanole mit 6 bis 12 C-Atomen im Alkvlrest abläßt

(b) die Katalysatormassen mit dem Alkohol oder der Alkoholmischung tränkt,

(c) die Alkohol-getränkten Katalysatormassen gegebenenfalls in dem Alkohol oder der Alkoholmischung lagert und/oder transportiert,

(d) die überschüssige Flüssigkeit entfernt,

(e) die Alkohol-feuchten Katalysatormassen siebt und

(f) in den Katalysereaktor unter Bildung einer Katalysator-Schüttschicht einfüllt.

Die im erfindungsgemäßen Verfahren zum Einsatz kommenden stückigen Katalysator-Ausgangsmassen werden vor Anwendung des erfindungsgemäßen Verfahrens in einem Aktivierungsschritt in an sich bekannter Weise von der katalytisch nicht aktiven Form in eine katalytisch aktive Form überführt. Dies geschieht in an sich bekannter Weise durch Behandlung mit einem reduzierenden Gasstrom, wobei zur Reduktion entweder reine reduzierende Gase oder Gasmischungen verwendet werden können, die reduzierende Gase enthalten. Ublicherweise wird als reduzierendes Gas Wasserstoff verwendet. Die reduzierenden Gasmischungen können demzufolge aus reinem Wasserstoff oder aus Gasmischungen bestehen, die Wasserstoff in beliebigen Volumenteilen, zusammen mit anderen, nicht reduzierend wirkenden Gasen, wie beispielsweise Stickstoff, enthalten. Der Aktivierungsschritt kann je nach Katalysator-Ausgangsmasse drucklos oder unter Druck durchgeführt werden. Dabei werden üblicherweise Temperaturen im Bereich von 20 bis 250°C, in Abhängigkeit von der Katalysator-Ausgangsmasse, angewendet.

Als Katalysator-Ausgangsmassen kommen dabei Stoffgemische auf Basis von Kupfer-, Chrom- und Zinkverbindungen in Frage, wobei in der Praxis insbesondere Oxide, Hydroxide, Carbonate, basische Carbonate und dergleichen Bedeutung haben. Die Ausgangsmassen werden üblicherweise durch Tablettierung, Strangpressen oder Pelletisieren zu festen Formteilen umgewandelt, die dann in ebenfalls bekannter Art und Weise durch Reduktion in die stückigen, aktivierten Katalysator-Ausgangsmassen umgewandelt werden. Derartige stückige aktivierte Katalysator-Ausgangsmassen bestehen - wie aus dem Stand der Technik bekannt - aus Formkörpern einer durchschnittlichen Teilchengröße im Bereich von 0,5 bis 20 mm, vorzugsweise von 2 bis 10 mm, besonders bevorzugt im Bereich von 3 bis 8 mm. Die Raumform des stückigen, aktivierten Katalysator-Ausgangsmaterials kann dabei regelmäßig oder unregelmäßig geformt sein.

Die nach dem erfindungsgemäßen Verfahren stabilisierten Hydrierkatalysatoren

sind als solche zur katalytischen Hydrierung von Triglyceriden, Fettsäureestern und freien Fettsäuren mit Wasserstoff bekannt, konnten jedoch bisher nicht befriedigend gegen Reoxidation stabilisiert werden. Sie wurden daher in situ, d.h. im Hydrierreaktor, reduzierend aktiviert, was zu den oben beschriebenen Nachteilen, insbesondere zur Abnahme des Volumens der Formkörper um bis zu 30 % führte. Kupfer/Chrom- bzw. Kupfer/Zink-Katalysatorformkörper können jedoch gemäß dem erfindungsgemäßen Verfahren besonders gut gegen Reoxidation getrennt vom Hydrierrekator stabilisiert werden, so daß der Nachteil der Schrumpfung der Formkörper im Hydrierreaktor nicht auftritt und eine 100 %ige Befüllung des Hydrierreaktors mit einer Katalysatorschüttung möglich ist.

Die stückigen, aktivierten Katalysator-Ausgangsmassen werden aus dem Aktivierreaktor, in dem sie von der inaktiven Form in die katalytisch aktive Form überführt wurden, unter Schutzgas abgelassen. Dabei wird als Schutzgas bevorzugt Stickstoff verwendet. Es ist jedoch auch möglich, andere geeignete Schutzgase, wie beispielsweise Argon, oder auch Schutzgasmischungen zu verwenden.

Entsprechend dem erfindungsgemäßen Verfahren werden die stückigen, aktivierten Katalysator-Ausgangsmassen in einen flüssigen Alkohol oder eine Mischung zweier oder mehrerer Alkohole abgelassen, die aus der Gruppe der geradkettigen und verzweigten Alkanole mit 6 bis 12 C-Atomen im Alkylrest ausgewählt sind. Als Alkohole kommen somit geradkettige oder verzweigte Hexanole, Heptanole, Octanole, Nonanole, Decanole, Undecanole oder Dodecanole in Frage. Als flüssiges Medium können einzelne Alkohole aus der genannten Gruppe verwendet werden. Es ist jedoch auch möglich, als flüssiges Medium eine Mischung zweier oder mehrerer der Alkohole aus der genannten Gruppe zu verwenden.

In einer bevorzugten Ausführungsform des erfindungsgemäßen Verfahrens läßt man die stückigen, aktivierten Katalysator-Ausgangsmassen unter Schutzgas in einen geradkettigen oder verzweigten Alkohol oder eine Mischung zweier oder mehrerer Alkohole aus der Gruppe der Alkanole mit 10 bis 12 C-Atomen im Alkylrest ab. Besonders bevorzugt ist es, Mischungen mehrerer geradkettiger Alkohole mit 10 bis 12 C-Atomen im Alkylrest, wie sie als Vorlauf-Fettalkohole bei der großtechnischen Fettalkoholherstellung anfallen, als Auffangmedium zur Stabilisierung der Katalysatormassen zu verwerden. Beispielsweise ist es möglich, sogenannten $C_{12}$-Vorlauffettalkohol zu verwenden, der hauptsächlich aus n-Dodecanol besteht.

Entsprechend dem erfindungsgemäßen Verfahren werden die stückigen, aktivierten Katalysator-Ausgangsmassen mit dem Alkohol oder der Alkoholmischung getränkt. Dabei kann eine Tränkung darin bestehen, daß jeder Katalysator-Formkörper vollständig mit dem Alkohol bzw. der Alkoholmischung durchtränkt ist oder nur eine Außenschicht des Katalysator-Formkörpers Alkohol-getränkt ist und dadurch auch das Innere des Formkörpers vor einer Reoxidation wirksam schützt. Welcher Durchtränkungsgrad sich im erfindungsgemäßen Verfahren einstellt, kann auf die jeweiligen Erfordernisse abgestellt werden und ermöglich dem Fachmann, auf unterschiedliche Festigkeiten bzw. Porositäten der Katalysator-Formkörper einzugehen. Im Einzelfall können dabei Tränkungszeiten von einer Stunde bis zu 50 Tagen eingehalten werden.

Sofern erwünscht, ist es möglich, die Alkohol-getränkten Katalysatormassen in dem Alkohol oder in der Alkoholmischung, in die sie abgelassen wurden, zu lagern oder zu transportieren. Dabei werden natürlicherweise Tränkungszeiten erreicht, die der Lagerzeit oder Transportzeit entsprechen. Das Belassen der Katalysatormassen in dem Alkohol oder der Alkoholmischung, insbesondere während der gesamten Zeit der Lagerung und/oder des Transports, ist als bevorzugte Ausführungsform des erfindungsgemäßen Verfahrens anzusehen, welche mit dem Vorteil verbunden ist, daß die stückigen, aktivierten Katalysator-Ausgangsmassen bestmöglich gegen eine Reoxidation geschützt sind und keine Gefahr besteht, daß die Aktivität der Katalysatoren darunter leidet. Zudem wird auf diesem Wege sichergestellt, daß die Katalysator-Formkörper nicht mit Sauerstoff in Berührung kommen und/oder sich entzünden.

Unmittelbar vor der Verwendung, d.h. vor dem Einfüllen in den für die katalytische Reaktion vorgesehenen Reaktor, wird von den stabilisierten stückigen Katalysatormassen die überschüssige Flüssigkeit entfernt. Die zur Stabilisierung verwendeten Alkohole können beispielsweise durch Abdekantieren, Abgießen, Ablassen oder Abpumpen des zur Stabilisierung verwendeten Alkohols oder der Alkoholmischung von überschüssiger Flüssigkeit befreit werden. In der Praxis erweist es sich als besonders wirksam, die flüssige Phase durch Abpumpen zu entfernen.

Die Alkohol-feuchten Katalysatormassen können dabei ohne Gefahr einer pyrophoren Reaktion oder Desaktivierung des Katalysators an der Luft gehandhabt werden. Dies zeigt am eindrucksvollsten, in welchem Ausmaß der flüssige Alkohol die Katalysator-Formmassen bzw. -Formkörper gegen Reoxidation stabilisiert. Die Katalysatormassen werden üblicherweise gesiebt und danach in dem Katalysereaktor unter Bildung einer Katalysator-Schüttschicht eingefüllt.

Dabei bilden die gemäß dem vorliegenden Verfahren stabilisierten stückigen Kupfer/Chrom- und Kupfer/Zink-Katalysatormassen eine nicht in Volumen schrumpfende Schüttschicht, die in der nachfolgenden Hydrierung von Triglyceriden, Fettsäureestern oder freien Fettsäuren mit Wasserstoff eine ausgezeichnete Aktivität und Selektivität zeigt und darin weitaus bessere Werte liefert, als Katalysatormassen, die in situ reduziert werden. Insbesondere läßt sich die gesamte Kapazität des Hydrierreaktors durch eine 100

EP 0 249 849 B1

%ige Füllung mit Katalysatorformlingen ausnutzen, wodurch die theoretisch erreichbare Raum-Zeit-Ausbeute nahezu erreicht werden kann. Die Hydrierrekation läßt sich ohne Nachaktivierung des Katalysatormaterials anfahren, und die Katalysator-Formkörper zeigen über die gesamte Hydrierzeit eine gleichbleibende Aktivität und Selektivität Auch längere Lager- bzw. Transportzeiten schaden den aktivierten Katalysatormassen nicht: Eine Reoxidation durch Luftsauerstoff findet nicht statt, auch wenn die Katalysatormassen nicht unter Schutzgas, sondern unter Luftsauerstoff gehandhabt werden.

Die Erfindung wird durch die nachfolgenden Beispiele näher erläutert.

Beispiel 1

700 ml eines für die Hydrierung von Fettsäuremethylestern einsetzbaren Katalysators auf Basis Kupfer/Zink mit Bariumdotierung (Tabletten mit einem Durchmesser von 3 mm) wurden im Rohrreaktor unter den folgenden Bedingungen reduziert:

$$\text{GHSV}^{*)}: \quad 2000 \ h^{-1};$$
$$\text{Reduktionsgas:} \quad H_2 \ in \ N_2, \ 1 \ Vol-\% \ maximal;$$
$$\text{Druck:} \quad 2 \ bar;$$
$$\text{Temperatur:} \quad \text{Anstieg von } 130°C \ auf \ 200°C \ in \ Schritten \ von \ 10°C/h; \ 12 \ h \ bei \ 200°C.$$

$$^{*)} \quad \text{Gasraumgeschwindigkeit (gaseous hourly space velocity)}$$

Das so aktivierte Katalysator-Ausgangsmaterial wurde unter einem Strom von $N_2$ in $C_{12}$-Vorlaufalkohol abgelassen. Die Katalysatortabletten wurden 24 Stunden in der Flüssigkeit belassen. Danach wurde der $C_{12}$-Vorlaufalkohol abgepumpt; die getränkten Tabletten wurden gesiebt und Alkohol-feucht in den Hochdruckreaktor eingebaut.

Mit den so hergestellten Katalysatortabletten konnte $C_{12/18}$-Methylester ohne Nachaktivierung des Katalysators unter folgenden Bedingungen hydriert werden:

$$H_2\text{-Druck:} \quad 250 \ bar;$$
$$\text{Temperatur:} \quad 230°C;$$
$$\text{LHSV}^{*)}: \quad 5 \ h^{-1};$$
$$\text{Umsatz:} \quad 97 \ \% \ und$$
$$\text{Hydrierdauer:} \quad 120 \ h.$$

$$^{*)} \quad \text{Flüssigkeitsraumgeschwindigkeit (liquid hourly space velocity)}$$

Die Katalysatortabletten waren über die gesamte Hydrierzeit mechanisch stabil und zeigten eine gleichbleibende Aktivität und Selektivität. Der Produktablauf war klar. Das erhaltene Produkt bestand zu 97 % aus $C_{12/18}$-Fettalkohol.

Beispiel 2

700 ml eines für die Direkthydrierung von Triglyceriden geeigneten Kupferchromit-Katalysators mit Barium-und Mangandotierung (Tabletten mit einem Durchmesser von 4 mm; Zusammensetzung: 36 $\pm$ 0,5 % Kupfer, 29 $\pm$ 0,5 % Chrom, 1,7 $\pm$ 0,5 % Barium, 2,5 $\pm$ 0,5 % Mangan und 1 $\pm$ 0,3 % $SiO_2$) wurden im

5

Rohrreaktor unter den in Beispiel 1 beschriebenen Bedingungen reduziert.

Die so reduzierten Katalysatortabletten wurden unter einem $N_2$-Strom in hauptsächlich aus n-Dodecanol bestehenden $C_{12}$-Vorlaufalkohol abgelassen. Die Tabletten wurden 24 Stunden in der Flüssigkeit belassen. Danach wurde die Alkoholmischung abgepumpt und die Alkoholfeuchten Tabletten wurden gesiebt und in den Hochdruck-Hydrierreaktor eingebaut.

Ohne daß eine Nachaktivierung erforderlich war, wurde Kokosöl unter folgenden Bedingungen hydriert:

$$
\begin{aligned}
&H_2\text{-Druck:} && 250 \text{ bar;} \\
&\text{Temperatur:} && 220\,°C; \\
&\text{LHSV:} && 1 \text{ h}^{-1}; \\
&\text{Umsatz:} && 47,5 \text{ \%} \\
&\text{Hydrierdauer:} && 120 \text{ h}
\end{aligned}
$$

Die Katalysatortabletten bewahrten über die gesamte Reaktionszeit ihre Stabilität. Der Produktablauf war klar; das erhaltene Produkt bestand zu 47,5 % aus $C_{12/18}$-Fettalkohol.

## Patentansprüche

1. Verfahren zur Stabilisierung stückiger, aktivierter Kupfer/Chrom- oder Kupfer/Zink-Hydrierkatalysatoren nach dem Schritt der Aktivierung der Katalysator-Ausgangsmassen auf Basis von Oxiden, Hydroxiden, Carbonaten und basischen Carbonaten in einem $H_2$ enthaltenen Gasstrom, dadurch gekennzeichnet, daß man

   (a) stückige, aktivierte Katalysator-Ausgangsmassen aus dem Aktivier-Reaktor unter Schutzgas in einen flüssigen Alkohol oder eine Mischung zweier oder mehrerer Alkohole aus der Gruppe der geradkettigen und verzweigten Alkanole mit 6 bis 12 C-Atomen im Alkylrest abläßt,

   (b) die Katalysatormassen mit dem Alkohol oder der Alkoholmischung tränkt,

   (c) die Alkohol-getränkten Katalysatormassen gegebenenfalls in dem Alkohol oder der Alkoholmischung lagert und/oder transportiert,

   (d) die überschüssige Flüssigkeit entfernt,

   (e) die Alkohol-feuchten Katalysatormassen siebt und

   (f) in den Katalysereaktor unter Bildung einer Katalysator-Schüttschicht einfüllt.

2. Verfahren nach Anspruch 1, dadurch gekennzeichnet, daß man als stückige Katalysatormassen Katalysator-Formlinge verwendet.

3. Verfahren nach Anspruch 2, dadurch gekennzeichnet, daß man als Katalysator-Formlinge Tabletten, Extrudate oder Pellets verwendet.

4. Verfahren nach Ansprüchen 1 bis 3, dadurch gekennzeichnet, daß man als Schutzgas $N_2$ verwendet.

5. Verfahren nach Ansprüchen 1 bis 4, dadurch gekennzeichnet, daß man die aktivierten Katalysator-Ausgangsmassen in einen geradkettigen oder verzweigten Alkohol oder eine Mischung zweier oder mehrerer Alkohole aus der Gruppe der Alkanole mit 10 bis 12 C-Atomen im Alkylrest abläßt.

6. Verfahren nach Anspruch 5, dadurch gekennzeichnet, daß man die aktivierten Katalysator-Ausgangsmassen in eine Mischung mehrerer geradkettiger und/oder verzweigter Alkohole mit 10 bis 12 C-Atomen im Alkylrest abläßt.

7. Verfahren nach Ansprüchen 1 bis 6, dadurch gekennzeichnet, daß man die Katalysatormassen durch Belassen in dem Alkohol oder der Alkoholmischung tränkt.

8. Verfahren nach Anspruch 7, dadurch gekennzeichnet, daß man die Katalysatormassen durch Belassen in dem Alkohol oder der Alkoholmischung während der Zeit der Lagerung und/oder des Transports tränkt.

9. Verfahren nach Ansprüchen 1 bis 8, dadurch gekennzeichnet, daß man die überschüssige Flüssigkeit durch Abdekantieren, Abgießen, Ablassen oder Abpumpen entfernt.

10. Verfahren nach den Ansprüchen 1 bis 9, dadurch gekennzeichnet, daß man

(a) stückige Katalysatormassen im $H_2$ enthaltenden Gasstrom aktivierter Kupfer/Chrom- oder Kupfer/Zink-Hydrierkatalysatoren aus dem Aktivierreaktor unter $N_2$ in einen geradkettigen oder verzweigten Alkohol mit 10 bis 12 C-Atomen im Alkylrest oder in eine Mischung mehrerer dieser Alkohole abläßt,

(b) die Katalysator-Formkörper durch Belassen in dem Alkohol oder der Alkoholmischung während der Zeit der Lagerung und/oder des Transports tränkt,

(c) die überschüssige Alkoholmischung durch Abpumpen entfernt und

(d) die Alkohol-feuchten Katalysator-Formkörper nach Sieben in den Hydrierreaktor unter Bildung einer KatalysatorSchüttschicht einfüllt.

## Claims

1. A method of stabilizing pieces of activated copper/chromium or copper/zinc hydrogenation catalysts after the step of activation of the catalyst starting materials based on oxides, hydroxides, carbonates and basic carbonates in a gas flow containing $H_2$, characterised in that

(a) pieces of activated starting materials are drawn off from the activating reactor under a protective gas into a fluid alcohol or a mixture of two or more alcohols from the group of straight-chained or branched alkanols having 6 to 12 carbon atoms in the alkyl radical,

(b) the catalyst materials are impregnated with the alcohol or the alcohol mixture,

(c) the alcohol-impregnated catalyst materials are optionally stored and/or transported in the alcohol or alcohol mixture,

(d) the excess fluid is removed,

(e) the alcohol-moist catalyst materials is screened and

(f) is fed into the catalysis reactor, thus forming a catalyst bulk layer.

2. A method according to Claim 1, characterised in that catalyst mouldings are used as piece-type catalyst materials.

3. A method according to Claim 2, characterised in that tablets, extrudates or pellets are used as catalyst mouldings.

4. A method according to Claims 1 to 3, characterised in that $N_2$ is used as the protective gas.

5. A method according to Claims 1 to 4, characterised in that the activated catalyst starting materials are drawn off into a straight-chained or branched alcohol or a mixture of two or more alchohols from the group of alkanols having 10 to 12 carbon atoms in the alkyl radical.

6. A method according to Claim 5, characterised in that the activated catalyst starting materials are drawn off into a mixture of a plurality of straight-chained and/or branched alcohols having 10 to 12 carbon atoms in the alkyl radical.

7. A method according to Claims 1 to 6, characterised in that the catalyst materials are impregnated by being left in the alcohol or alcohol mixture.

8. A method according to Claim 7, characterised in that the catalyst materials are impregnated by being left in the alcohol or alcohol mixture during the time of storage and/or transportation.

9. A method according to Claims 1 to 8, characterised in that the excess fluid is removed by decanting, pouring off, drawing off or pumping off.

10. A method according to Claims 1 to 9, characterised in that

(a) pieces of catalyst materials of activated copper/chromium or copper/zinc hydrogenation catalysts, in the gas flow containing $H_2$, are drawn off from the activating reactor under $N_2$ into a straight-chained or branched alcohol having 10 to 12 carbon atoms in the alkyl radical, or into a mixture of a

7

plurality of these alcohols,

(b) the catalyst mouldings are impregnated by being left in the alcohol or the alcohol mixture during the time of storage and/or transportation,

(c) the excess alcohol mixture is removed by being pumped off, and

(d) the alcohol-moist catalyst moulded bodies are fed, after screening, into the hydrogenation reactor, thus forming a catalyst bulk layer.

**Revendications**

1. Procédé de stabilisation de catalyseurs d'hydrogénation cuivre/chrome ou cuivre/zinc, activés, en morceaux, après l'étape d'activation des masses de départ de catalyseur à base d'oxydes, d'hydroxydes, de carbonates et de carbonates basiques dans un courant de gaz contenant $H_2$, caractérisé par le fait que :

(a) ou laisse s'écouler des masses de départ du catalyseur, activées, en morceaux, à partir du réacteur d'activation, sous gaz protecteur, dans un alcool liquide ou un mélange de deux alcools, ou davantage, du groupe des alcanols à chaîne droite ou ramifiés, ayant 6 à 12 atomes de C dans le reste alkyle ;

(b) on imprègne les masses de catalyseur de l'alcool ou du mélange d'alcools;

(c) on stocke et/ou on transporte les masses de catalyseur imprégnées d'alcool, le cas échéant, dans l'alcool ou le mélange d'alcools;

(d) on élimine le liquide en excès;

(e) on tamise les masses de catalyseur humidifiées par l'alcool ; et

(f) on les introduit dans le réacteur de catalyse avec formation d'une couche en vrac de catalyseur.

2. Procédé selon la revendication 1, caractérisé par le fait qu'on utilise, comme masses de catalyseur en morceaux, des agglomérés de catalyseur.

3. Procédé selon la revendication 2, caractérisé par le fait qu'on utilise, comme agglomérés de catalyseur, des pastilles, des extrudats ou des boulettes.

4. Procédé selon les revendications 1 à 3, caractérisé par le fait qu'on utilise $N_2$ comme gaz protecteur.

5. Procédé selon les revendications 1 à 4, caractérisé par le fait qu'on laisse s'écouler les masses de départ de catalyseur, activées, dans un alcool à chaîne droite ou ramifié ou un mélange de deux alcools, ou davantage, choisis dans le groupes des alcanols ayant 10 à 12 atomes de C dans le reste alkyle.

6. Procédé selon la revendication 5, caractérisé par le fait qu'on laisse s'écouler les masses de départ du catalyseur, activées, dans un mélange de plusieurs alcools à chaîne droite et/ou ramifiés ayant 10 à 12 atomes de C dans le reste alkyle.

7. Procédé selon les revendications 1 à 6, caractérisé par le fait qu'on imprègne les masses de catalyseur en les laissant dans l'alcool ou le mélange d'alcools.

8. Procédé selon la revendication 7, caractérisé par le fait qu'on imprègne les masses de catalyseur en les laissant dans l'alcool ou le mélange d'alcools pendant le temps du stockage et/ou du transport.

9. Procédé selon les revendications 1 à 8, caractérisé par le fait qu'on élimine le liquide en excès par décantation, coulée du trop-plein, soutirage ou pompage.

10. Procédé selon les revendications 1 à 9, caractérisé par le fait que :

(a) on laisse d'écouler des masses de catalyseur en morceaux de catalyseurs d'hydrogénation cuivre/chrome ou cuivre/zinc, activés dans un courant de gaz contenant $H_2$, à partir du réacteur d'activation, sous $N_2$, dans un alcool à chaîne droite ou ramifié ayant 10 à 12 atomes de C dans le reste alkyle ou dans un mélange de plusieurs de ces alcools;

(b) on imprègne les corps façonnés de catalyseur en les laissant dans l'alcool ou le mélange d'alcools pendant le temps du stockage et/ou du transport;

(c) on élimine le mélange d'alcools en excès par pompage; et

(d) on introduit les corps façonnés de catalyseur humidifiés par l'alcool, après tamisage, dans un réacteur d'hydrogénation avec formation d'une couche en vrac de catalyseur.